# EUROPÄISCHE PATENTSCHRIFT

(11) **EP 4 652 399 B1**
(45) Veröffentlichungstag und Bekanntmachung des Hinweises auf die Patenterteilung: **11.11.2026**
(21) Anmeldenummer: 24700415.3
(22) Anmeldetag: 09.01.2024
(51) Int. Cl.: F17C 7/00, F17C 13/02

(54) **VERFAHREN ZUM BETREIBEN EINER TANKVORRICHTUNG ZUM SPEICHERN EINES GASTREIBSTOFFS UND TANKVORRICHTUNG ZUM SPEICHERN EINES GASTREIBSTOFFS**
METHOD FOR THE OPERATION OF A TANK UNIT FOR STORING A GASEOUS FUEL, AND TANK UNIT FOR STORING A GASEOUS FUEL
PROCÉDÉ POUR FAIRE FONCTIONNER UNE UNITÉ DE RÉSERVOIR POUR STOCKER UN COMBUSTIBLE GAZEUX, ET UNITÉ DE RÉSERVOIR POUR STOCKER UN COMBUSTIBLE GAZEUX

(30) Priorität: 20.01.2023 DE 102023200441
(43) Veröffentlichungstag der Anmeldung: 26.11.2025
(73) Patentinhaber: Robert Bosch GmbH, 70442 Stuttgart (DE)
(72) Erfinder: KUHNERT, Christian, 71665 Vaihingen/Enz (DE); KIEFERLE, Stefan, 70469 Stuttgart (DE); STRASSER, Markus, 70180 Stuttgart (DE)
(86) Internationale Anmeldenummer: PCT/EP2024/050385
(87) Internationale Veröffentlichungsnummer: WO 2024/153496

(56) Entgegenhaltungen:
- EP-A1- 3 067 614
- DE-A1- 102019 103 797
- DE-A1- 102020 123 039
- US-A1- 2018 138 528

## Beschreibung

Die vorliegende Erfindung betrifft ein Verfahren zum Betreiben einer Tankvorrichtung zum Speichern eines Gastreibstoffs und Tankvorrichtung zum Speichern eines Gastreibstoffs.

### Stand der Technik

Bei bekannten Druckspeichertanks können Sicherheitsvorrichtungen und/oder Ventile verbaut sein. Dazu sind Brennstoffzellensysteme mit Tankanordnungen oder Tanks für gasförmige Medien bekannt. Druckspeichertanks können mit einem Ventil ausgestattet sein, um den Tankinhalt abzusperren oder abzulassen.

Bei üblichen H2-Tanksystemen mit mehreren Gastanks, welche jeweils mit einem eigenen Tankventil ausgestattet sind, sind nicht notwendigerweise alle Tanks mit einem eigenen Drucksensor ausgestattet. Eine Ermittlung des Tankstands an dem Tank und bei mehreren Tanks nach Erreichen des Druckausgleichs ist wünschenswert.

In der DE112006003013B4 wird ein Tank mit einer Armatur und einem Ventil beschrieben, wobei das Ventil in der Armatur befestigt ist.

In der US2018138528A1 wird ein weiteres Tanksystem nach dem Stand der Technik offenbart.

### Offenbarung der Erfindung

Die vorliegende Erfindung schafft ein Verfahren zum Betreiben einer Tankvorrichtung zum Speichern eines Gastreibstoffs nach Anspruch 1 und eine Tankvorrichtung zum Speichern eines Gastreibstoffs nach Anspruch 7.

Bevorzugte Weiterbildungen sind Gegenstand der Unteransprüche.

### Vorteile der Erfindung

Die der vorliegenden Erfindung zugrundeliegende Idee besteht darin, ein Verfahren zum Betreiben einer Tankvorrichtung zum Speichern eines Gastreibstoffs und eine Tankvorrichtung zum Speichern eines Gastreibstoffs anzugeben, bei welchem eine Leckage an einem Tankbehälter besser erkannt werden kann.

Erfindungsgemäß handelt es sich um ein Verfahren zum Betreiben einer Tankvorrichtung zum Speichern eines Gastreibstoffs, wobei die Tankvorrichtung einen oder eine Mehrzahl von Tankbehältern und zumindest eine Ventileinrichtung umfasst, welche den Tankbehälter mit einem Gasleitungssystem verbindet, wobei die zumindest eine Ventileinrichtung mit einem jeweiligen Tankbehälter verbunden ist, wobei die jeweilige Ventileinrichtungen dazu eingerichtet sind, den Gastreibstoff in den jeweiligen Tankbehälter einzulassen und/oder abzulassen und/oder den Tankinhalt des jeweiligen Tankbehälters in Richtung Gasleitungssystem abzutrennen; die Tankvorrichtung weiterhin umfassend zumindest einen Hochdrucksensor im Gasleitungssystem, zumindest einen Temperatursensor in jedem Tankbehälter; und eine Steuereinrichtung, welche mit den Temperatursensoren, mit dem Hochdrucksensor und den Ventileinrichtungen verbunden ist; das Verfahren umfassend, ein Ermitteln und Speichern einer Gastemperatur in jedem der Tankbehälter über die Temperatursensoren und zumindest eines Drucks im Gasleitungssystem an einem ersten Zeitpunkt vor Schließen der Ventileinrichtungen; ein Ermitteln einer Gastemperatur in jedem der Tankbehälter über die Temperatursensoren an einem zweiten Zeitpunkt vor einer Folgeansteuerung der Ventileinrichtungen; ein Berechnen eines erwarteten Gasdrucks in jedem der Tankbehälter mittels der abgespeicherten Gastemperaturen in den Tankbehältern und dem Druck im Gasleitungssystem zum ersten Zeitpunkt und den Gastemperaturen in den Tanks zum zweiten Zeitpunkt; ein Bestimmen des Tankbehälters mit dem kleinsten berechneten erwarteten Gasdruck; ein Ansteuern und Öffnen der Ventileinrichtung des Tankbehälters mit dem kleinsten berechneten erwarteten Gasdruck; ein Ermitteln des sich stationär einstellenden Drucks, etwa im Gasleitungssystem im Hoch-und/oder Mitteldruckbereich, nach Druckaufbau im Gasleitungssystem zu einem dritten Zeitpunkt; ein Berechnen der Differenz aus berechnet erwartetem Gasdruck des geöffneten Tankbehälters mit dem sich stationär einstellenden Druck nach Druckaufbau im Gasleitungssystem, etwa entsprechend der Ermittlung im Hoch- und/oder Mitteldruckbereich; und ein Vergleichen der Differenz mit einem zulässigen Schwellwert, wobei wenn dieser Schwellwert überschritten wird, auf eine Tankleckage geschlossen wird.

Während einer Stillstandzeit eines Fahrzeugs mit Wasserstoff-Speichersystem kann es möglich sein, dass sich in den einzelnen Tankbehältern unterschiedliche Drücke einstellen, was aus unterschiedlichen Temperaturänderungen in den einzelnen Tankbehältern resultieren kann, beispielsweise durch unterschiedliche Aufheizung oder Abkühlung aufgrund unterschiedlicher Tankausführungen oder unterschiedlicher
Umgebungsrandbedingungen. Die Folgeansteuerung kann einem Öffnen einer Ventileinrichtung entsprechen.

Gemäß einer bevorzugten Ausführungsform des Verfahrens wird der berechnet erwartete Gasdruck in dem Gasleitungssystem zum dritten Zeitpunkt in Abhängigkeit des Gasdrucks des Tankbehälters mit dem kleinsten berechneten Tankdruck und dem Druck im Gasleitungssystem zum zweiten Zeitpunkt bestimmt.

Gemäß einer bevorzugten Ausführungsform des Verfahrens wird der berechnet erwartete Gasdruck in dem Gasleitungssystem zum dritten Zeitpunkt in Abhängigkeit vom Druck im Mitteldruckgasleitungssystem zum zweiten Zeitpunkt und dritten Zeitpunkt bestimmt.

Gemäß einer bevorzugten Ausführungsform des Verfahrens wird der berechnet erwartete Gasdruck in dem Gasleitungssystem zum dritten Zeitpunkt in Abhängigkeit von der verbrauchten Gasmasse des Verbrauchers zwischen zweiten Zeitpunkt und dritten Zeitpunkt bestimmt.

Gemäß einer bevorzugten Ausführungsform des Verfahrens wird nach dem Öffnen der Ventileinrichtung an dem Tankbehälter mit dem geringsten Druck zum zweiten Zeitpunkt die Temperatur der übrigen Tankbehälter überwacht und dadurch die Identifizierung des Tankbehälters mit dem geringsten Druck plausibilisiert.

Gemäß einer bevorzugten Ausführungsform des Verfahrens wird die Identifizierung des Tankbehälters mit dem geringsten Druck dadurch plausibilisiert, dass keine Temperatursteigerung in den anderen Tankbehältern von größer als einer vorbestimmten Toleranz erfolgt.

Erfindungsgemäß umfasst die Tankvorrichtung zum Speichern eines Gastreibstoffs einen oder eine Mehrzahl von Tankbehältern, zumindest eine Ventileinrichtung, wobei die zumindest eine Ventileinrichtung mit einem jeweiligen Tankbehälter verbunden ist, wobei die jeweilige Ventileinrichtungen dazu eingerichtet sind, den Gastreibstoff in den jeweiligen Tankbehälter einzulassen und/oder abzulassen und/oder den Tankinhalt des jeweiligen Tankbehälters in Richtung Gasleitungssystem abzutrennen; ein Gasleitungssystem, welches mit der zumindest einen Ventileinrichtung verbunden ist;
zumindest einen Hochdrucksensor im Gasleitungssystem, zumindest einen Temperatursensor in jedem Tankbehälter; und eine Steuereinrichtung, welche mit den Temperatursensoren, mit dem Hochdrucksensor und den Ventileinrichtungen verbunden und dazu eingerichtet ist, das erfindungsgemäße Verfahren durchzuführen.

Der eine oder mehrere Tankbehälter können zusammen mit dem Gasleitungssystem ein Gasspeichersystem darstellen.

Das Gasleitungssystem kann zum Zuführen des Gastreibstoffs zu den Tankbehältern dienen und auch zum Abtransport des Gases von den Tankbehältern zum Motor oder zur Brennstoffzelle des Fahrzeugs hin. Die Ventileinrichtung kann ein verschließbares Ventil umfassen, welches elektrisch geöffnet und geschlossen werden kann. Ein Druckausgleich zwischen den Tanks kann erfolgen, indem die Tankventile geöffnet werden und Gas an die Zuleitung zum Gasleitungssystem abgegeben werden kann.

Bei dem Fahrzeug kann es sich um ein Brennstoffzellen-Fahrzeug handeln. Der Gastreibstoff kann dabei ein gasförmiges Gas für das Betreiben einer Brennstoffzelle sein, beispielsweise Wasserstoff oder auch andere dafür mögliche Gase. Andererseits kann es sich bei dem Gastreibstoff auch um ein Gas für ein gasbetriebenes Fahrzeug handeln, etwa CNG oder LPG, hierbei kann es sich auch um Flüssiggas handeln.

Die Sensoreinrichtung kann einen oder mehrere Sensoren umfassen, mit welchen eine Verminderung des Drucks, und/oder ein Druckgradient und/oder ein Temperaturgradient und/oder eine Temperatur in dem Tankbehälter oder dem Gasleitungssystem, erkannt werden kann.

Die Steuereinrichtung kann mit der Ventileinrichtung eines oder mehrerer Tankbehälter und mit Sensoren verbunden sein und diese auslesen.

Das Verfahren kann sich auch durch die in Verbindung mit der Tankvorrichtung genannten Merkmale und dessen Vorteile auszeichnen und umgekehrt.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Die vorliegende Erfindung wird nachfolgend anhand der in den schematischen Figuren der Zeichnung angegebenen Ausführungsbeispiele näher erläutert.

Es zeigt:
Fig. 1 eine schematische Darstellung einer Tankvorrichtung zum Speichern eines Gastreibstoffs gemäß einem Ausführungsbeispiel der vorliegenden Erfindung; und
Fig. 2 eine Blockdarstellung von Verfahrensschritten des Verfahrens zum Betreiben einer Tankvorrichtung zum Speichern eines Gastreibstoffs für ein Fahrzeug gemäß einem Ausführungsbeispiel der vorliegenden Erfindung.

In den Figuren bezeichnen gleiche Bezugszeichen gleiche bzw. funktionsgleiche Elemente.

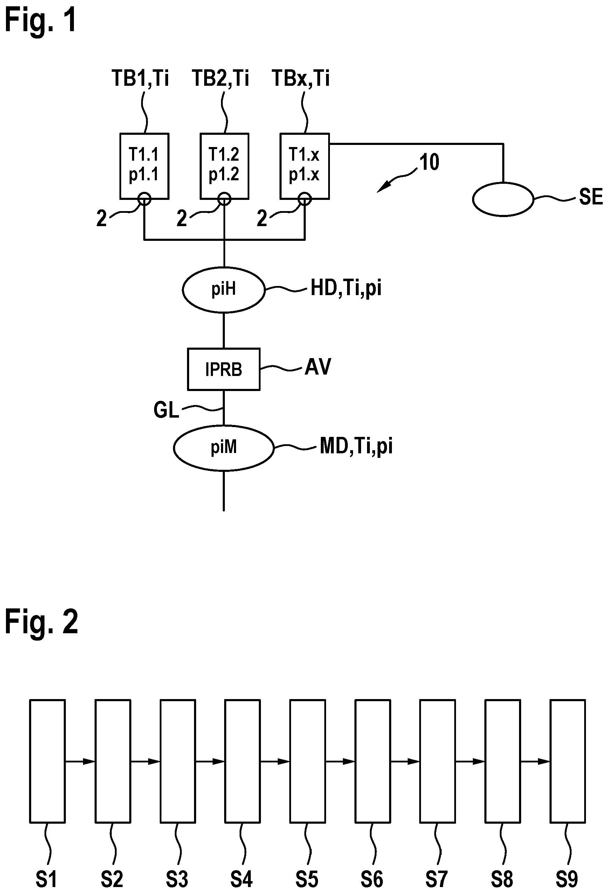

Fig. 1 zeigt eine schematische Darstellung einer Tankvorrichtung zum Speichern eines Gastreibstoffs gemäß einem Ausführungsbeispiel der vorliegenden Erfindung.

Die Tankvorrichtung 1 zum Speichern eines Gastreibstoffs für ein Fahrzeug F, umfasst nach der Fig. 1 eine Mehrzahl von Tankbehältern TB1, TB2, TBx, beispielsweise mit Wasserstoff gefüllte oder füllbare Flaschen. Die Tankvorrichtung 1 umfasst eine Mehrzahl von Ventileinrichtungen 2, wobei jeder der Tankbehälter (TB1, TB2, ..., TBx) mit einer eigenen Ventileinrichtung 2 verbunden ist, wobei die Ventileinrichtung 2 dazu eingerichtet ist, den Gastreibstoff in den zumindest einen Tankbehälter einzulassen und/oder abzulassen; ein Gasleitungssystem GL, welches mit der zumindest einen Ventileinrichtung 2 verbunden ist; zumindest einen Hochdrucksensor piH im Gasleitungssystem GL, zumindest einen Temperatursensor Ti in jedem Tankbehälter; und eine Steuereinrichtung SE, welche mit den Temperatursensoren Ti, mit dem Hochdrucksensor piH verbunden ist und welche dazu eingerichtet ist, diese auszulesen, und wobei die Steuereinrichtung SE mit den Ventileinrichtungen 2 verbunden ist (aus Gründen der Übersichtlichkeit nicht gezeigt) und dazu eingerichtet ist, die Ventileinrichtungen 2 zu schließen und/oder zu öffnen.

Die Gasleitung GL kann einen Hochdruckbereich HD und einen Mitteldruckbereich MD umfassen. Dabei kann der Hochdruckbereich HD an die Ventileinrichtungen 2 der Tankbehälter anschließen und zwischen dem Hochdruckbereich und dem Mitteldruckbereich ein Ablassventil AV angeordnet sein. Im Hochdruckbereich HD kann ein Temperatursensor Ti und ein Drucksensor piH vorhanden sein und beispielsweise ein erster Druck zu einem ersten Zeitpunkt gemessen werden. Im Mitteldruckbereich MD kann ein Temperatursensor Ti und ein Drucksensor piM vorhanden sein.

Durch den Druck im Hochdruckbereich zum ersten Zeitpunkt kann auf die Drücke in den Tankbehältern p1.1, p1.2, ... p1.x zu einem anderen Zeitpunkt rückgeschlossen werden.

Der erste Zeitpunkt betrifft einen Zustand des Fahrzeugs, in welchem der Motor und/oder die Brennstoffzelle in Funktion ist und die Ventileinrichtungen geöffnet sind, jedoch das Abstellen kurz bevorstehen kann. Dabei kann angenommen werden, dass der Druck im Hochdruckbereich HD der Gasleitung GL und der Tankbehälter gleich ist (oder zumindest innerhalb einer Toleranz gleich ist).

Die Ventile können beim Abstellen des Fahrzeugs geschlossen werden. Vor dem Abstellen (erster Zeitpunkt) können die Tanks und das Gasleitungssystem druckausgeglichen sein. Der zweite Zeitpunkt kann einer Zeit vor einem Start des Fahrzeugs und vor einem Öffnen der Ventile entsprechen. Optional kann die Berechnung der Tankdrücke zum zweiten Zeitpunkt unter einer Annahme erfolgen, dass das Leitungssystem (auch das Hoch- und Mitteldrucksystem) und die Tankbehälter (wenn etwa eine Umgebungstemperatur allen Tanktemperaturen entspricht) temperaturausgeglichen sind.

Der resultierende Druck zum dritten Zeitpunkt (nach Öffnen des Ventils) kann am Hochdruck- und Mitteldruckbereich gemessen werden.

Mit dem Verfahren kann eine Dichtheit eines Tanks überwacht werden. Des Weiteren kann zum ersten Zeitpunkt auch der Druck im Mitteldruckbereich gemessen werden. Zum zweiten Zeitpunkt, insbesondere vor dem erneuten Start des Fahrzeugs und/oder der Brennstoffzelle, und bei noch geschlossenen Ventileinrichtungen an den Tankbehältern, können die Temperaturen und der Druck am Hochdruckbereich und am Mitteldruckbereich gemessen werden.

Durch Änderungen der Temperatur im Stillstand können sich die Drücke in den Tankbehältern unterscheiden, etwa auch bei einem Leck. Es kann beispielsweise der Druck zum zweiten Zeitpunkt und am x-ten Tankbehälter gemäß p2.x = p1.x * (T2.x/T1.x) berechnet werden, wobei der Index 1 die Größe am ersten Zeitpunkt und der Index 2 die Größe am zweiten Zeitpunkt darstellt. Zum dritten Zeitpunkt, also nach dem Öffnen des Ventils am Tankbehälter mit dem geringsten Druck, kann auch eine Bestimmung der nötigen Masse im Hochdruck- und Mitteldruckbereich für den Druckaufbau in MD und HD und ggf. der Masse zum Verbraucher ermittelt werden, und vorteilhaft erkannt werden, ob p3MD > p2MD, p3HD > p2HD, als der Druck zum dritten Zeitpunkt im Mitteldruckbereich größer sein kann als der Druck zum zweiten Zeitpunkt im Mitteldruckbereich, ebenso für den Hochdruckbereich.

Gegebenenfalls kann die bereits durch den Verbraucher abgenommenen Masse des Gastreibstoffs (etwa aus einem Volumensstrom über die Zeit ermittelt) berücksichtigt werden.

Fig. 2 zeigt eine Blockdarstellung von Verfahrensschritten des Verfahrens zum Betreiben einer Tankvorrichtung zum Speichern eines Gastreibstoffs für ein Fahrzeug gemäß einem Ausführungsbeispiel der vorliegenden Erfindung.

Erfindungsgemäß erfolgt bei dem Verfahren zum Betreiben einer Tankvorrichtung zum Speichern eines Gastreibstoffs ein Ermitteln S1 und Speichern S2 einer Gastemperatur in jedem der Tankbehälter über die Temperatursensoren und zumindest eines Drucks im Gasleitungssystem an einem ersten Zeitpunkt vor Schließen der Ventileinrichtungen; ein Ermitteln S3 einer Gastemperatur in jedem der Tankbehälter über die Temperatursensoren an einem zweiten Zeitpunkt vor einer Folgeansteuerung der Ventileinrichtungen; ein Berechnen S4 eines erwarteten Gasdrucks in jedem der Tankbehälter mittels der abgespeicherten Gastemperaturen in den Tankbehältern und dem Druck im Gasleitungssystem zum ersten Zeitpunkt und den Gastemperaturen in den Tanks zum zweiten Zeitpunkt; ein Bestimmen S5 des Tankbehälters mit dem kleinsten berechneten erwarteten Gasdruck; ein Ansteuern und Öffnen S6 der Ventileinrichtung des Tankbehälters mit dem kleinsten berechneten erwarteten Gasdruck; ein Ermitteln S7 des sich stationär einstellenden Drucks nach Druckaufbau im Gasleitungssystem zu einem dritten Zeitpunkt; ein Berechnen S8 der Differenz aus berechnet erwartetem Gasdruck des geöffneten Tankbehälters mit dem sich stationär einstellenden Druck nach Druckaufbau im Gasleitungssystem; und ein Vergleichen S9 der Differenz mit einem zulässigen Schwellwert, wobei wenn dieser Schwellwert überschritten wird, auf eine Tankleckage geschlossen wird.

Obwohl die vorliegende Erfindung anhand des bevorzugten Ausführungsbeispiels vorstehend vollständig beschrieben wurde, ist sie darauf nicht beschränkt, sondern auf vielfältige Art und Weise modifizierbar.

## Patentansprüche

1. Verfahren zum Betreiben einer Tankvorrichtung (1) zum Speichern eines Gastreibstoffs, wobei die Tankvorrichtung (1) umfasst:
einen oder eine Mehrzahl von Tankbehältern (TB1, TB2, ..., TBn),
zumindest eine Ventileinrichtung (2), welche den Tankbehälter (TB1, TB2;...TBn) mit einem Gasleitungssystem (GL) verbindet, wobei die zumindest eine Ventileinrichtung (2) mit einem jeweiligen Tankbehälter (TB1, TB2, ..., TBn) verbunden ist, wobei die jeweilige Ventileinrichtungen (2) dazu eingerichtet sind, den Gastreibstoff in den jeweiligen Tankbehälter (TB1, TB2, ..., TBn) einzulassen und/oder abzulassen und/oder den Tankinhalt des jeweiligen Tankbehälters (TB1, TB2, ..., TBn) in Richtung Gasleitungssystem abzutrennen; zumindest einen Hochdrucksensor (piH) im Gasleitungssystem (GL),
zumindest einen Temperatursensor (Ti) in jedem Tankbehälter; und
eine Steuereinrichtung (SE), welche mit den Temperatursensoren (Ti), mit dem Hochdrucksensor (piH) und den Ventileinrichtungen (2) verbunden ist;
das Verfahren **gekennzeichnet durch** die Schritte:
- Ermitteln (S1) und Speichern (S2) einer Gastemperatur in jedem der Tankbehälter über die Temperatursensoren und zumindest eines Drucks im Gasleitungssystem an einem ersten Zeitpunkt (t1) vor Schließen der Ventileinrichtungen (2);
- Ermitteln (S3) einer Gastemperatur in jedem der Tankbehälter über die Temperatursensoren an einem zweiten Zeitpunkt (t2) vor einer Folgeansteuerung der Ventileinrichtungen (2);
- Berechnen (S4) eines erwarteten Gasdrucks in jedem der Tankbehälter mittels der abgespeicherten Gastemperaturen in den Tankbehältern und dem Druck im Gasleitungssystem zum ersten Zeitpunkt (t1) und den Gastemperaturen in den Tanks zum zweiten Zeitpunkt (t2);
- Bestimmen (S5) des Tankbehälters mit dem kleinsten berechneten erwarteten Gasdruck;
- Ansteuern und Öffnen (S6) der Ventileinrichtung des Tankbehälters mit dem kleinsten berechneten erwarteten Gasdruck;
- Ermitteln (S7) des sich stationär einstellenden Drucks nach Druckaufbau im Gasleitungssystem zu einem dritten Zeitpunkt (t3);
- Berechnen (S8) der Differenz aus berechnet erwartetem Gasdruck des geöffneten Tankbehälters mit dem sich stationär einstellenden Druck nach Druckaufbau im Gasleitungssystem (GL);
- Vergleich (S9) der Differenz mit einem zulässigen Schwellwert, wobei wenn dieser Schwellwert überschritten wird, auf eine Tankleckage geschlossen wird.

2. Verfahren nach Anspruch 1, bei welchem der berechnet erwartete Gasdruck in dem Gasleitungssystem zum dritten Zeitpunkt (t3) in Abhängigkeit des Gasdrucks des Tankbehälters mit dem kleinsten berechneten Tankdruck und dem Druck im Gasleitungssystem zum Zeitpunkt (t2) bestimmt wird.

3. Verfahren nach Anspruch 1 oder 2, bei welchem der berechnet erwartete Gasdruck in dem Gasleitungssystem zum dritten Zeitpunkt (t3) in Abhängigkeit vom Druck im Mitteldruckgasleitungssystem zum zweiten Zeitpunkt (t2) und dritten Zeitpunkt (t3) bestimmt wird.

4. Verfahren nach Anspruch 1 oder 2 oder 3, bei welchem der berechnet erwartete Gasdruck in dem Gasleitungssystem zum dritten Zeitpunkt (t3) in Abhängigkeit von der verbrauchten Gasmasse des Verbrauchers zwischen zweiten Zeitpunkt (t2) und dritten Zeitpunkt (t3) bestimmt wird.

5. Verfahren nach einem der Ansprüche 1 bis 4, bei welchem nach dem Öffnen der Ventileinrichtung an dem Tankbehälter mit dem geringsten Druck zum zweiten Zeitpunkt (t2) die Temperatur der übrigen Tankbehälter überwacht wird und dadurch die Identifizierung des Tankbehälters mit dem geringsten Druck plausibilisiert wird.

6. Verfahren nach Anspruch 5, bei dem die Identifizierung des Tankbehälters mit dem geringsten Druck dadurch plausibilisiert wird, dass keine Temperatursteigerung in den anderen Tankbehältern von größer als einer vorbestimmten Toleranz erfolgt.

7. Tankvorrichtung (1) zum Speichern eines Gastreibstoffs, umfassend:
einen oder eine Mehrzahl von Tankbehältern (TB1, TB2, ..., TBn),
zumindest eine Ventileinrichtung (2), wobei die zumindest eine Ventileinrichtung (2) mit einem jeweiligen Tankbehälter (TB1, TB2, ..., TBn) verbunden ist, wobei die jeweilige Ventileinrichtungen (2) dazu eingerichtet sind, den Gastreibstoff in den jeweiligen Tankbehälter (TB1, TB2, ..., TBn) einzulassen und/oder abzulassen und/oder den Tankinhalt des jeweiligen Tankbehälters (TB1, TB2, ..., TBn) in Richtung Gasleitungssystem abzutrennen;
ein Gasleitungssystem (GL), welches mit der zumindest einen Ventileinrichtung (2) verbunden ist;
zumindest einen Hochdrucksensor (piH) im Gasleitungssystem (GL),
zumindest einen Temperatursensor (Ti) in jedem Tankbehälter; und
eine Steuereinrichtung (SE), welche mit den Temperatursensoren (Ti), mit dem Hochdrucksensor (piH) und den Ventileinrichtungen (2) verbunden und dazu eingerichtet ist, das Verfahren nach Anspruch 1 bis 6 durchzuführen.

## Claims

1. Method for operating a tank device (1) for storing a gaseous fuel, wherein the tank device (1) comprises:
one or more tank vessels (TB1, TB2, ..., TBn),
at least one valve device (2), which connects the tank vessel (TB1, TB2; ...TBn) to a gas line system (GL), wherein the at least one valve device (2) is connected to a respective tank vessel (TB1, TB2, ..., TBn), wherein the respective valve devices (2) are designed to admit and/or drain the gaseous fuel into/from the respective tank vessel (TB1, TB2, ..., TBn) and/or to separate off the tank contents of the respective tank vessel (TB1, TB2, ..., TBn) in the direction of the gas line system;
at least one high-pressure sensor (piH) in the gas line system (GL),
at least one temperature sensor (Ti) in each tank vessel; and
a control device (SE), which is connected to the temperature sensors (Ti), the high-pressure sensor (piH) and the valve devices (2);
the method being **characterized by** the following steps:
- ascertaining (S1) and storing (S2) a gas temperature in each of the tank vessels via the temperature sensors and at least one pressure in the gas line system at a first time (t1) before closing the valve devices (2);
- ascertaining (S3) a gas temperature in each of the tank vessels via the temperature sensors at a second time (t2) before subsequent actuation of the valve devices (2);
- calculating (S4) an expected gas pressure in each of the tank vessels by means of the stored gas temperatures in the tank vessels and the pressure in the gas line system at the first time (t1) and the gas temperatures in the tanks at the second time (t2);
- determining (S5) the tank vessel with the lowest calculated expected gas pressure;
- actuating and opening (S6) the valve device of the tank vessel with the lowest calculated expected gas pressure;
- ascertaining (S7) the steady-state pressure established after pressure build-up in the gas line system at a third time (t3);
- calculating (S8) the difference between the calculated expected gas pressure of the opened tank vessel and the steady-state pressure established after pressure build-up in the gas line system (GL);
- comparing (S9) the difference with a permissible threshold value, wherein if this threshold value is exceeded, a tank leak is inferred.

2. Method according to Claim 1, in which the calculated expected gas pressure in the gas line system at the third time (t3) is determined depending on the gas pressure of the tank vessel with the lowest calculated tank pressure and the pressure in the gas line system at the time (t2).

3. Method according to Claim 1 or 2, in which the calculated expected gas pressure in the gas line system at the third time (t3) is determined depending on the pressure in the medium-pressure gas line system at the second time (t2) and the third time (t3).

4. Method according to Claim 1 or 2 or 3, in which the calculated expected gas pressure in the gas line system at the third time (t3) is determined depending on the consumed gas mass of the consumer between the second time (t2) and the third time (t3).

5. Method according to any of Claims 1 to 4, in which, after the valve device on the tank vessel with the lowest pressure at the second time (t2) is opened, the temperature of the remaining tank vessels is monitored and the identification of the tank vessel with the lowest pressure is checked for plausibility in this way.

6. Method according to Claim 5, wherein the identification of the tank vessel with the lowest pressure is checked for plausibility by way of there being no increase in temperature in the other tank vessels of greater than a predetermined tolerance.

7. Tank device (1) for storing a gaseous fuel, comprising:
one or more tank vessels (TB1, TB2, ..., TBn),
at least one valve device (2), wherein the at least one valve device (2) is connected to a respective tank vessel (TB1, TB2, ..., TBn), wherein the respective valve devices (2) are designed to admit and/or drain the gaseous fuel into/from the respective tank vessel (TB1, TB2, ..., TBn) and/or to separate off the tank contents of the respective tank vessel (TB1, TB2, ..., TBn) in the direction of the gas line system;
a gas line system (GL), which is connected to the at least one valve device (2);
at least one high-pressure sensor (piH) in the gas line system (GL),
at least one temperature sensor (Ti) in each tank vessel; and
a control device (SE), which is connected to the temperature sensors (Ti), the high-pressure sensor (piH) and the valve devices (2) and is configured to carry out the method according to Claims 1 to 6.

## Revendications

1. Procédé pour faire fonctionner un dispositif de réservoir (1) pour stocker un combustible gazeux, le dispositif de réservoir (1) comprenant :
un ou une pluralité de récipients de réservoir (TB1, TB2, ..., TBn),
au moins un dispositif de soupape (2) qui relie le récipient de réservoir (TB1, TB2, ...TBn) à un système de conduites de gaz (GL), le ou les dispositifs de soupape (2) étant reliés à un récipient de réservoir (TB1, TB2, ..., TBn) respectif, les dispositifs de soupape (2) respectifs étant conçus pour introduire et/ou extraire le combustible gazeux dans le réservoir (TB1, TB2, ..., TBn) respectif et/ou pour séparer le contenu du récipient de réservoir (TB1, TB2, ..., TBn) respectif dans la direction du système de conduites de gaz ; au
moins un capteur haute pression (piH) dans le système de conduites de gaz (GL),
au moins un capteur de température (Ti) dans chaque récipient de réservoir ; et
un dispositif de commande (SE) qui est relié aux capteurs de température (Ti), au capteur haute pression (piH) et aux dispositifs de soupape (2) ;
le procédé étant **caractérisé par** les étapes suivantes :
- détermination (S1) et mémorisation (S2) d'une température de gaz dans chacun des récipients de réservoir au moyen des capteurs de température, et d'au moins une pression dans le système de conduites de gaz à un premier instant (t1) avant la fermeture des dispositifs de soupape (2) ;
- détermination (S3) d'une température de gaz dans chacun des récipients de réservoir au moyen des capteurs de température à un deuxième instant (t2) avant l'actionnement séquentiel des dispositifs de soupape (2) ;
- calcul (S4) d'une pression de gaz attendue dans chacun des récipients de réservoir au moyen des températures de gaz mémorisées, dans les récipients de réservoir, et de la pression dans le système de conduites de gaz au premier instant (t1) et des températures de gaz dans les réservoirs au deuxième instant (t2) ;
- détermination (S5) du récipient de réservoir ayant la pression de gaz attendue calculée la plus basse ;
- activation et ouverture (S6) du dispositif de soupape du récipient de réservoir ayant la pression de gaz attendue calculée la plus basse ;
- détermination (S7) de la pression en régime stabilisé après montée en pression dans le système de conduites de gaz à un troisième instant (t3) ;
- calcul (S8) de la différence entre la pression de gaz attendue calculée du récipient de réservoir ouvert et la pression en régime stabilisé après montée en pression dans le système de conduites de gaz (GL) ;
- comparaison (S9) de la différence avec une valeur seuil admissible, une fuite de réservoir étant déduite lorsque cette valeur seuil est dépassée.

2. Procédé selon la revendication 1, dans lequel la pression de gaz attendue calculée dans le système de conduites de gaz au troisième instant (t3) est déterminée en fonction de la pression de gaz du récipient de réservoir ayant la pression de réservoir calculée la plus basse et de la pression dans le système de conduites de gaz à l'instant (t2).

3. Procédé selon la revendication 1 ou 2, dans lequel la pression de gaz attendue calculée dans le système de conduites de gaz au troisième instant (t3) est déterminée en fonction de la pression dans le système de conduites de gaz à moyenne pression au deuxième instant (t2) et au troisième instant (t3).

4. Procédé selon la revendication 1 ou 2 ou 3, dans lequel la pression de gaz attendue calculée dans le système de conduites de gaz au troisième instant (t3) est déterminée en fonction de la masse de gaz consommée par le consommateur entre le deuxième instant (t2) et le troisième instant (t3).

5. Procédé selon l'une quelconque des revendications 1 à 4, dans lequel, après l'ouverture du dispositif de soupape sur le récipient de réservoir ayant la pression la plus basse, au deuxième instant (t2), la température des autres récipients de réservoir est surveillée et la plausibilité de l'identification du récipient de réservoir ayant la pression la plus basse est ainsi vérifiée.

6. Procédé selon la revendication 5, dans lequel la plausibilité de l'identification du récipient de réservoir ayant la pression la plus basse est vérifiée par le fait qu'aucune augmentation de température supérieure à une tolérance prédéterminée ne se produit dans les autres récipients de réservoir.

7. Dispositif de réservoir (1) pour stocker un combustible gazeux, comprenant :
un ou une pluralité de récipients de réservoir (TB1, TB2, ..., TBn),
au moins un dispositif de soupape (2), le ou les dispositifs de soupape (2) étant reliés à un récipient de réservoir (TB1, TB2, ..., TBn) respectif, les dispositifs de soupape (2) respectifs étant conçus pour introduire et/ou extraire le combustible gazeux dans le récipient de réservoir (TB1, TB2, ..., TBn) respectif et/ou pour séparer le contenu du récipient de réservoir (TB1, TB2, ..., TBn) respectif dans la direction du système de conduites de gaz ;
un système de conduites de gaz (GL) qui est relié au ou aux dispositifs de soupape (2) ;
au moins un capteur haute pression (piH) dans le système de conduites de gaz (GL),
au moins un capteur de température (Ti) dans chaque récipient de réservoir ; et
un dispositif de commande (SE) qui est relié aux capteurs de température (Ti), au capteur de haute pression (piH) et aux dispositifs de soupape (2) et qui est conçu pour mettre en œuvre le procédé selon les revendications 1 à 6.
